# EUROPÄISCHE PATENTANMELDUNG

(11) **EP 2 813 914 A1**
(43) Veröffentlichungstag der Anmeldung: **17.12.2014**
(21) Anmeldenummer: 13171501.3
(22) Anmeldetag: 11.06.2013
(51) Int. Cl.: G05D 1/10

(54) **Überwachung von technischen Anlagen mit einem unbemannten Flugobjekt**

(71) Anmelder: Siemens Aktiengesellschaft, 80333 München (DE)
(72) Erfinder: Lehofer, Martin, 4050 Traun (AT); Weinzinger, Michael, 4020 Linz (AT)
(74) Vertreter: Maier, Daniel Oliver

(57) **Zusammenfassung**

Die Erfindung betrifft ein Verfahren zur Überwachung zumindest einer technischen Anlage (1,2,3) eines Industriebetriebs (4), umfassend die Verfahrensschritte: Hinterlegung eines Aktionsplans (5) in einer Steuerungseinheit (6) eines autonom fliegenden unbemannten Flugobjekts (7), wobei der Aktionsplan (5) eine Flugroute (8) und eine oder mehrere auszuführende Aktionen (9) von im unbemannten Flugobjekt (7) integrierten Detektionseinrichtungen (10) umfasst, Flug des unbemannten Flugobjekts (7) entlang der Flugroute (8) zu der zumindest einen zu überwachenden technischen Anlage (1,2,3) und anschließend Durchführen der im Aktionsplan (5) hinterlegten auszuführenden Aktionen (9) mittels der Detektionseinrichtungen (10).

Die Erfindung betrifft weiter ein System, ein Computerprogramm (24) und ein Computerprogrammprodukt (25) zur Durchführung des erfindungsgemäßen Verfahrens.

Damit ist eine einfache und kostengünstige Überwachung von technischen Anlagen (1,2,3) möglich, insbesondere weil dazu kein Überwachungspersonal notwendig ist.

## Beschreibung

### Technisches Gebiet

Die Erfindung betrifft ein Verfahren zur Überwachung einer technischen Anlage eines Industriebetriebs mit einem unbemannten Flugobjekt. Weiterhin betrifft die Erfindung ein System, ein Computerprogramm und ein Computerprogrammprodukt zur Überwachung einer technischen Anlage eines Industriebetriebs.

### Stand der Technik

Anlagen eines Industriebetriebs werden auf Grund unterschiedlicher Anforderungen einer Überwachung unterzogen. Beispielsweise sind diese Anforderungen sicherheitstechnischer, produktionstechnischer oder gesetzlicher Natur.

Die einfachste Methode ist eine manuelle Überwachung, bei der die Anlagen durch Überwachungspersonal in regelmäßigen Zeitabständen in Augenschein genommen werden und dabei manuell auf ihren ordnungsgemäßen Zustand hin überprüft werden. Dies ist mit hohen Kosten sowie großem Personalaufwand verbunden.

Weithin verbreitet ist auch die Überwachung der Anlagen mittels fix installierter Kameras. Nachteilig dabei sind folgende Faktoren:
- Die Überwachung großer Anlagen beziehungsweise weit von einander entfernten Anlagen eines Industriebetriebs erfordert eine Vielzahl an solchen Kameras.
- Kameras sind teuer, insbesondere, wenn es sich um Kameras handelt, die auch im nichtsichtbaren Frequenzspektrum, wie beispielsweise im Infrarotbereich, betrieben werden können.
- Es ist ein hoher Personalaufwand für die Bedienung und Wartung der Kameras erforderlich.
- Die Installation der Kameras ist teuer.
- Aus baulichen Gründen ist die optimale Positionierung der Kameras oftmals nicht möglich, wodurch Anlagen oder Anlagenteile überhaupt nicht oder nur suboptimal erfasst werden können.
- Durch nachträgliche Positionsänderungen von Anlagenbauteilen kann die Sicht auf die zu überwachenden Anlagen eingeschränkt beziehungsweise gänzlich behindert werden.

Neuere Verfahren zur Überwachung von Anlagen in Industriebetrieben bedienen sich sogenannter Unmanned Aerial Vehicles (UAV), das sind Flugobjekte, welche beispielsweise mit Kameras ausgestattet sind. Die UAVs werden dabei vom Überwachungspersonal mittels einer Fernsteuerung zu den zu überwachenden Anlagen oder Anlagenteilen gesteuert, um dort den Zustand der Anlagen oder Anlagenteile zu überprüfen. Mit diesem neueren Verfahren können zwar einige der vorhin in Zusammenhang mit den fix installierten Kameras genannten Nachteile überwunden werden, jedoch ist beim Einsatz solcher UAV weiterhin Überwachungspersonal beziehungsweise Bedienpersonal zur Steuerung der UAV notwendig. Außerdem muss die Flugroute des UAV vom Überwachungspersonal manuell, entsprechend der aktuellen betrieblichen Verhältnisse, wie beispielsweise laufende oder geplante Umbauarbeiten oder temporäre, bewegliche oder nichtbewegliche Hindernisse, permanent überwacht und gegebenenfalls neu festgelegt oder geändert werden.

Befinden sich die zu überwachenden Anlagen im Außenbereich des Industriebetriebs, so müssen vom Überwachungspersonal zusätzlich die aktuellen und zu erwartenden Wetterverhältnisse zur Beurteilung der Durchführbarkeit eines Überwachungsfluges herangezogen werden.

### Zusammenfassung der Erfindung

### Technische Aufgabe

Der Erfindung liegt die Aufgabe zugrunde, eine Weiterentwicklung der aus dem Stand der Technik bekannten Verfahren zur Überwachung einer Anlage eines Industriebetriebs bereitzustellen.

### Technische Lösung

Diese Aufgabe wird gelöst durch ein Verfahren zur Überwachung zumindest einer technischen Anlage eines Industriebetriebs, umfassend die Verfahrensschritte:
- Hinterlegung eines Aktionsplans in einer Steuerungseinheit eines autonom fliegenden unbemannten Flugobjekts, wobei der Aktionsplan umfasst:
   - eine Flugroute für das unbemannte Flugobjekt,
   - eine oder mehrere auszuführende Aktionen von im unbemannten Flugobjekt integrierten Detektionseinrichtungen,
- Flug des unbemannten Flugobjekts entlang der Flugroute zu der zumindest einen zu überwachenden technischen Anlage und anschließend
- Durchführen der im Aktionsplan hinterlegten auszuführenden Aktionen mittels der Detektionseinrichtungen.

Unter einer technischen Anlage ist beispielsweise ein Förderband, ein metallurgisches Verarbeitungsaggregat, eine Produktionsanlage, ein metallurgisches Behältnis oder eine Förderleitung zu verstehen. Selbstverständlich sind darunter auch Anlagenbauteile zu verstehen.

Die erfindungsgemäßen autonom fliegenden unbemannten Flugobjekte, im Folgenden mit UAV bezeichnet, fliegen autonom. Das bedeutet, dass während des Fluges des UAV keine Steuerung durch ein Bedienpersonal notwendig ist. Das UAV ist jedoch derart ausgelegt, dass während des Fluges des UAV jederzeit eine Beeinflussung des Aktionsplans mittels einer Bodenkontrollstation möglich ist. Dazu steht die Steuerungseinheit permanent in Verbindung mit der Bodenkontrollstation. Grundsätzlich können solche UAV mittels Daten von satellitengestützte Navigationssystemen, beispielsweise GPS, GLONASS oder GALILEO, welche mittels entsprechender Satellitendaten-Empfangseinheiten verarbeitet werden, navigieren. Das UAV ist mit einer derartigen Satellitendaten-Empfangseinheit ausgestattet. In der Steuerungseinheit wird der Aktionsplan hinterlegt beziehungsweise abgespeichert. Vorzugsweise erfolgt dies vor dem Flug des UAV. Der Aktionsplan umfasst zumindest zwei Elemente, nämlich die Flugroute und eine oder mehrere auszuführende Aktionen von den im UAV integrierten Detektionseinrichtungen. Die Flugroute wird in Form von nacheinander anzufliegenden Zielpunkten beziehungsweise Koordinaten in der Steuerungseinheit abgespeichert. Die Koordinaten entsprechen den Koordinaten der zu überwachenden Anlagen oder Anlagenteile. Vorzugsweise handelt es sich bei den Koordinaten um GPS-Koordinaten. Der Aktionsplan umfasst in Form von Daten abgespeicherte Informationen, die festlegen, welche Aktionen mittels der im UAV integrierten Detektionseinrichtungen an den entsprechenden Zielpunkten beziehungsweise Koordinaten auszuführen sind. Sind die im UAV integrierten Detektionseinrichtungen beispielsweise eine Kamera und ein Gasanalysator, so kann im Aktionsplan hinterlegt sein, am ersten Zielpunkt Fotoaufnahmen einer ersten Anlage mittels der Kamera anzufertigen und am zweiten Zielpunkt einer zweiten Anlage, beispielsweise eine Förderleitung, eine Überprüfung auf Gasaustritt mittels des Gasanalysators durchzuführen. Der Start des Fluges des UAV erfolgt aus einer Basisstation heraus und nach Anfliegen des letzten Zielpunkts und Ausführen der letzten auszuführenden Aktion fliegt das UAV wieder zu dieser zurück. Dies erfolgt vollständig autonom, das heißt ohne eine Einflussnahme des Bedienpersonals auf das UAV während des Fluges.

Mittels des erfindungsgemäßen Verfahrens ist eine einfache und kostengünstige Überwachung der technischen Anlagen möglich, insbesondere weil kein oder nur wenig Überwachungspersonal beziehungsweise Bedienpersonal notwendig ist. Die im Stand der Technik genannten Nachteile werden dadurch überwunden.

In einer bevorzugten Ausführungsform des erfindungsgemäßen Verfahrens ist die Steuerungseinheit an ein Datenverarbeitungssystem, welches ein Logistiksystem und/oder ein Produktionsplanungssystem und/oder ein Instandhaltungsplanungssystem des Industriebetriebs umfasst, angebunden und aktuelle Daten des Datenverarbeitungssystems werden zur Festlegung der Flugroute, zur Anpassung der Flugroute während des Fluges und/oder zur Entscheidung über die Durchführbarkeit des Fluges des unbemannten Flugobjekts herangezogen.

Die Steuerungseinheit des UAV ist an das Datenverarbeitungssystem des Industriebetriebs angebunden. Darunter ist zu verstehen, dass vor, während und nach dem Flug des UAV Daten leitungsgebunden oder leitungsungebunden in beide Richtungen zwischen dem Datenverarbeitungssystem und der Steuerungseinheit ausgetauscht werden können. Die im Produktionsplanungssystem enthaltenen Daten umfassen insbesondere alle produktionsrelevanten Daten des Industriebetriebs, wie beispielsweise die aktuellen und geplanten Betriebsparameter der Anlagen. Die im Logistiksystem enthaltenen Daten umfassen insbesondere alle Daten in Zusammenhang mit der raum-, zeit-, art- und mengenmäßigen Veränderung von Gütern im Industriebetrieb. Beispielsweise umfassen diese Daten den Zeitpunkt und die Transportroute von aktuellen und geplanten Transporten von Gütern, die aktuelle und geplante Position von Gütern oder die Art der Güter. Im Gegensatz zum Produktionsplanungssystem und zum Logistiksystem umfasst das Instandhaltungsplanungssystem beispielsweise Wartungs- und Inspektionspläne, die zu erwartende Lebensdauer der Anlagen und der Anlagenteile sowie statistische Daten wie die Anzahl der notwendigen Wartungsarbeiten, Laufzeitinformationen und Daten der letzen Inspektion. Auf Basis dieser Wartungspläne wird der Aktionsplan für die durchzuführenden Aktionen der im UAV integrierten Detektionseinrichtungen für jede zu überwachende Anlage erstellt und in der Steuerungseinheit hinterlegt. Zur Festlegung der Flugroute werden die im Instandhaltungsplanungssystem hinterlegten Zielpunkte beziehungsweise die Koordinaten der zu überwachenden Anlagen und Anlagenteile unter Berücksichtigung der produktionsrelevanten Daten und der Daten des Logistiksystems herangezogen. Die Erstellung der Flugroute erfolgt insbesondere unter den Randbedingungen, dass die Flugroute so weit außerhalb von aktuellen oder geplanten Transportrouten von Gütern liegt, dass während des Fluges des UAV keine Gefährdung für das UAV gegeben ist. Außerdem werden aktuelle oder geplante außergewöhnliche betriebliche Situationen, wie beispielsweise Baustellen, Instandhaltungsarbeiten oder Umbauten an oder von Anlagen im Industriebetrieb, welche in einem der Datenverarbeitungssysteme hinterlegt sind, bei der Erstellung der Flugroute entsprechend berücksichtigt. Die derart bestimmte Flugroute wird in der Steuerungseinheit hinterlegt.

Die Flugroute kann auch während des Fluges des UAV, unter Berücksichtigung der aktuellen Daten des Datenverarbeitungssystems, entsprechend der vorhin genannten Randbedingungen angepasst beziehungsweise verändert werden, da die Steuerungseinheit permanent an das Datenverarbeitungssystem, vorzugsweise per Funkverbindung, angebunden ist.

Zusätzlich werden die Daten des Datenverarbeitungssystems zur Beurteilung der Durchführbarkeit des Fluges des UAV herangezogen. Kollidiert beispielweise die Flugroute mit den im Logistiksystem hinterlegten aktuellen oder geplanten Transportrouten von Gütern oder ist die Zugänglichkeit bestimmter zu überwachender Anlagen durch im Instandhaltungsplanungssystem hinterlegte Instandhaltungsarbeiten oder Umbauten behindert, so wird der Flug nicht oder gegebenenfalls zu einem späteren Zeitpunkt durchgeführt.

Damit ist eine vollständig autonome, automatisierte und flexible Überwachung einer oder mehrerer Anlagen des Industriebetriebs möglich.

In einer weiteren bevorzugten Ausführungsform des erfindungsgemäßen Verfahrens werden während des Fluges des unbemannten Flugobjekts Hindernisse innerhalb der Flugroute und/oder das unbemannte Flugobjekt gefährdende Umgebungsbedingungen von Sensorikeinrichtungen des unbemannten Flugobjekts erkannt, wonach automatisch oder manuell eine alternative Flugroute festgelegt wird.

Hindernisse innerhalb der Flugroute können beispielsweise Kraftfahrzeuge, Menschen, Anlagen, Anlagenteile, Wände, Dächer, Bäume oder Güter sein. Um solche Hindernisse innerhalb der Flugroute zu erkennen, verfügt das UAV über unterschiedliche Sensorikeinrichtungen, wie beispielsweise Einrichtungen zur Messung des Abstandes zwischen dem UAV und dem Hindernis. Zusätzlich verfügt das UAV über Einrichtungen zum Erkennen von das UAV gefährdenden Umgebungsbedingungen, beispielsweise Temperatursensoren. Nähert sich das UAV beispielsweise einem Gebiet mit einer Temperatur, welche das UAV beschädigen würde, so wird dieses Gebiet gemieden. Wird ein Hindernis erkannt, beziehungsweise wird eine gefährdende Umgebungsbedingung erkannt, wird automatisch oder manuell während des Fluges des UAV eine alternative Flugroute festgelegt. Automatisch bedeutet in diesem Zusammenhang, die alternative Flugroute wird automatisch von der Steuerungseinheit des UAV berechnet. Unter manuell ist in diesem Zusammenhang eine manuelle Festlegung einer alternativen Flugroute durch das Bedienpersonal zu verstehen, welche während des Fluges des UAV von der Bodenkontrollstation in die Steuerungseinheit des UAV übertragen wird. Selbstverständlich kann das UAV in einem manuellen Modus auch in Echtzeit von der Bodenkontrollstation aus durch das Bedienpersonal gesteuert werden.

Damit wird eine Kollision des UAV mit Hindernissen oder eine Beschädigung des UAV durch für das UAV schädliche Umgebungsbedingungen vermieden. Weiter ist jederzeit die Übernahme der Steuerung des UAV durch das Bedienpersonal möglich.

Vorteilhafterweise wird der Start des Fluges des unbemannten Flugobjekts, gegebenenfalls nach manueller Freigabe, durch das Datenverarbeitungssystem des Industriebetriebs ausgelöst.

Damit verbunden ist der Vorteil, dass der Start des Flugs des UAV automatisch vom Datenverarbeitungssystem, vorzugsweise vom Instandhaltungsplanungssystem, in dem die Wartungs- beziehungsweise Instandhaltungspläne hinterlegt sind, getriggert wird.

Eine manuelle Freigabe des Fluges des UAV erfolgt beispielsweise dann, wenn vor dem Flug besondere Sicherheitsmaßnahmen wie die Absperrung von Anlagen oder Warnhinweise an das Anlagenpersonal erforderlich sind.

In einer weiteren vorteilhaften Ausgestaltung des erfindungsgemäßen Verfahrens werden vorhandene Positionserkennungssysteme im Industriebetrieb, insbesondere Kransysteme, Satellitenbasierte Positionierungssystem oder drahtlose Netzwerke, zur Positionserkennung und/oder zur Planung der Flugroute des unbemannten Flugobjekts genutzt.

Satellitenbasierte Positionierungssysteme sind insbesondere GPS, GLONASS oder GALILEO. Damit werden bereits im Industriebetrieb vorhandene Positionssysteme zur Bestimmung der Position des UAV genutzt, wodurch eine sehr genaue Positionsbestimmung des UAV im Industriebetrieb möglich ist.

In einer anderen bevorzugten Ausführungsform des erfindungsgemäßen Verfahrens umfassen die auszuführenden Aktionen das Sammeln von Daten über die zumindest eine zu überwachende technische Anlage, wobei die Daten während und/oder nach dem Flug des UAV mittels einer Sendeeinheit des UAV zu einer Empfangseinheit übertragen werden, wonach eine Auswertung der Daten erfolgt.

In einer Variante des erfindungsgemäßen Verfahrens werden die gesammelten Daten der zu überwachenden technischen Anlage während des Fluges des UAV in einer Speichereinheit des UAV gespeichert und nach der Landung des UAV in die Empfangseinheit übertragen. Die gespeicherten Daten werden mittels einer geeigneten Auswerteeinheit ausgewertet und analysiert. In einer weiteren Variante werden die während des Fluges gesammelten Daten schon während des Fluges mittels der Sendeeinheit des UAV an die Empfangseinheit übertragen und gegebenenfalls schon während des Fluges mittels der Auswerteeinheit ausgewertet und zu analysiert. Beispielsweise können während des Fluges des UAV Livebilder der zu überwachenden technischen Anlage an die Empfangseinheit übertragen werden, welche vom Bedienpersonal beziehungsweise Überwachungspersonal unmittelbar ausgewertet werden. Es ist auch eine vollständig automatisierte Auswertung der gesammelten Daten denkbar. Damit können, wenn auf Grund der Ergebnisse der Auswertung der gesammelten Daten Anomalien der zu überwachenden technischen Anlagen festgestellt werden, noch während des Fluges weitere Daten der entsprechenden technischen Anlage gesammelt und zur Empfangseinheit übertragen und ausgewertet werden. Die ausgewerteten Daten können auch automatisch an ein Condition Monitoring System übertragen werden, das ein Instandhaltungspersonal im Falle von festgestellten Anomalien der zu überwachenden technischen Anlage, beispielsweise mittels Human Interface Devices (HMI), Tablets oder Smartphones, alarmiert.

Die Steuerungseinheit ist an ein Wetterdatensystem angebunden und Wetterdaten des Wetterdatensystems werden zur Entscheidung über die Durchführbarkeit des Fluges des unbemannten Flugobjekts herangezogen.

Die Wetterdaten des Wetterdatensystems werden in die Steuerungseinheit des UAV übertragen, dort analysiert und basierend auf dem Ergebnis der Analyse der Wetterdaten erfolgt eine Startfreigabe des UAV. Dies ist beispielsweise dann relevant, wenn sich die zu überwachende Anlage im Außenbereich des Industriebetriebs befindet und das UAV während des Fluges schädlichen Wetterbedingungen ausgesetzt wäre. Eine Startfreigabe erfolgt auch dann nicht, wenn die im Rahmen eines Überwachungsfluges zu sammelnden Daten auf Grund der vorherrschenden Wetterbedingungen nicht zuverlässig wären - beispielsweise Fotoaufnahmen von Anlagen im Außenbereich des Industriebetriebs bei Nebel oder Temperaturmessungen mit Infrarotkameras bei starkem Sonnenlicht oder Einstrahlung der Sonne in Aufnahmerichtung.

Damit wird einerseits eine Beschädigung des UAV durch ungünstige Wetterbedingungen verhindert, andererseits wird ein Überwachungsflug gar nicht erst gestartet, wenn ein zuverlässiges Sammeln von Daten nicht möglich ist.

Die Detektionseinrichtungen sind als Kamera, Thermokamera, Temperatursensor, Feuchtigkeitssensor und/oder Gasanalysator ausgeführt.

Die Daten über die zumindest eine zu überwachende technische Anlage umfassen:
- Fotoaufnahmen und/oder Thermographieaufnahmen der zumindest einen zu überwachenden technischen Anlage und/oder
- Temperatur und/oder Feuchtigkeit und/oder Gaszusammensetzung in der Umgebung der zumindest einen zu überwachenden technischen Anlage und/oder
- Temperatur der zu überwachenden technischen Anlage.

Damit können viele verschiedene physikalische und chemische Parameter der zu überwachenden Anlagen gesammelt werden.

Ein weiterer Gegenstand der Erfindung ist ein System zur Überwachung zumindest einer technischen Anlage eines Industriebetriebs, wobei das System umfasst:
- ein autonom fliegendes unbemanntes Flugobjekt (UAV) mit Detektionseinrichtungen zur Erfassung von Informationen über die zumindest eine zu überwachende technische Anlage,
- eine im unbemannten Flugobjekt integrierte Steuerungseinheit zur Steuerung des unbemannten Flugobjekts,
- ein in der Steuerungseinheit hinterlegter Aktionsplan, umfassend zumindest eine Flugroute für das unbemannte Flugobjekt und eine oder mehrere auszuführende Aktionen der Detektionseinrichtungen.

Unter Dektektionseinrichtungen sind Einrichtungen zur Erfassung von physikalischen und chemischen Parametern der technischen Anlage oder des Produktionsprozesses oder der produzierten Güter zu verstehen. Das UAV umfasst selbstverständlich auch alle für das Fliegen notwendigen Einrichtungen, wie beispielsweise Propeller, Düsen oder Flugstabilisierungseinrichtungen, welche von der Steuerungseinheit des UAV gesteuert werden.

Mittels des erfindungsgemäßen Systems ist eine einfache und kostengünstige Überwachung der technischen Anlagen möglich, insbesondere weil kein oder nur wenig Überwachungspersonal notwendig ist. Die im Stand der Technik genannten Nachteile werden dadurch überwunden.

In einer bevorzugten Ausführungsform des erfindungsgemäßen Systems ist die Steuerungseinheit an ein Datenverarbeitungssystem, insbesondere an ein Logistiksystem und/oder an ein Produktionsplanungssystem und/oder an ein Instandhaltungsplanungssystem des Industriebetriebs angebunden.

Die Steuerungseinheit des UAV ist an das Datenverarbeitungssystem des Industriebetriebs angebunden. Darunter ist zu verstehen, dass vor, während und nach dem Flug des UAV Daten leitungsgebunden oder leitungsungebunden in beide Richtungen zwischen dem Datenverarbeitungssystem und dem Steuerungseinheit ausgetauscht werden können.

Damit ist eine vollständig autonome, automatisierte und flexible Überwachung einer oder mehrerer Anlagen eines Industriebetriebs möglich.

In einer weiteren bevorzugten Ausführungsform des erfindungsgemäßen Systems umfasst das unbemannte Flugobjekt Sensorikeinrichtungen zur Erkennung von Hindernissen innerhalb der Flugroute und/oder zur Erkennung von das unbemannte Flugobjekt gefährdenden Umgebungsbedingungen während des Flugs.

Damit wird eine Kollision des UAV mit Hindernissen oder eine Beschädigung des UAV durch für das UAV schädliche Umgebungsbedingungen vermieden. Weiter ist jederzeit die Übernahme der Steuerung des UAV durch ein Bedienpersonal möglich.

Eine andere bevorzugte Ausführungsform des erfindungsgemäßen Systems ist dadurch gekennzeichnet, dass die Steuerungseinheit an vorhandene Positionserkennungssysteme im Industriebetrieb, insbesondere an Kransysteme, an Satellitenbasierte Positionierungssysteme und/oder an drahtlose Netzwerke angebunden ist.

Satellitenbasierte Positionierungssysteme sind insbesondere GPS, GLONASS oder GALILEO. Damit werden bereits im Industriebetrieb vorhandene Positionssysteme zur Bestimmung der Position des UAV genutzt, wodurch eine sehr genaue Positionsbestimmung des UAV im Industriebetrieb möglich ist.

Das erfindungsgemäße System umfasst eine im unbemannten Flugobjekt integrierte Sendeeinheit zur Übermittlung von mittels der Detektionseinrichtung gesammelten Daten über die zumindest eine zu überwachende technische Anlage an eine Empfangseinheit und die Empfangseinheit zum Empfang der von der Sendeeinheit übermittelten Daten.

Die gesammelten Daten der zu überwachenden technischen Anlage werden während des Fluges des UAV in einer Speichereinheit des UAV gespeichert und nach der Landung des UAV in die Empfangseinheit übertragen. Die gespeicherten Daten werden mittels einer geeigneten Auswerteeinheit ausgewertet und analysiert. In einer Variante werden die während des Fluges gesammelten Daten schon während des Fluges mittels der Sendeeinheit an die Empfangseinheit übertragen und gegebenenfalls schon während des Fluges mittels der Auswerteeinheit entweder manuell oder automatisiert ausgewertet und analysiert. Damit können, wenn auf Grund der Ergebnisse der Auswertung der gesammelten Daten Anomalien der zu überwachenden Anlagen festgestellt werden, noch während des Fluges weitere Daten der entsprechenden Anlage gesammelt und zur Empfangseinheit übertragen und ausgewertet werden. Die Empfangseinheit ist dazu an die Auswerteeinheit angebunden, welche vorzugsweise wiederum in Verbindung mit einem Condition Monitoring System steht.

Eine bevorzugte Ausführungsform des erfindungsgemäßen Systems ist dadurch gekennzeichnet, dass die Steuerungseinheit an ein Wetterdatensystem angebunden ist.

Die Wetterdaten des Wetterdatensystems werden in die Steuerungseinheit des UAV übertragen, dort analysiert und basierend auf dem Ergebnis der Analyse der Wetterdaten erfolgt eine Startfreigabe des UAV.

Damit wird einerseits eine Beschädigung des UAV verhindert, andererseits wird ein Überwachungsflug gar nicht erst gestartet, wenn ein zuverlässiges Sammeln von Daten nicht möglich ist.

Vorzugsweise umfasst das erfindungsgemäße System Detektionseinrichtungen wie Kameras und/oder Thermokameras und/oder Temperatursensoren und/oder Feuchtigkeitssensoren und/oder Gasanalysatoren.

Damit können viele verschiedene physikalische und chemische Parameter der zu überwachenden Anlagen oder von Produktionsprozessen beziehungsweise von produzierten Gütern gesammelt werden.

Ein weiterer Gegenstand der Erfindung ist ein Computerprogramm zur Durchführung des erfindungsgemäßen Verfahrens bei Ablauf in der Steuerungseinheit des erfindungsgemäßen Systems.

Ein anderer Gegenstand der Erfindung ist ein Computerprogrammprodukt, auf dem das Computerprogramm gespeichert ist.

Zusammenfassend betrifft die Erfindung ein Verfahren zur Überwachung zumindest einer technischen Anlage eines Industriebetriebs, welches die Verfahrensschritte: Hinterlegung eines Aktionsplans in einer Steuerungseinheit eines autonom fliegenden unbemannten Flugobjekts umfasst, wobei der Aktionsplan eine Flugroute sowie eine oder mehrere auszuführende Aktionen von im unbemannten Flugobjekt integrierten Detektionseinrichtungen umfasst, Flug des unbemannten Flugobjekts entlang der Flugroute zu der zumindest einen zu überwachenden technischen Anlage und anschließend Durchführen der im Aktionsplan hinterlegten auszuführenden Aktionen mittels der Detektionseinrichtungen.

Die Erfindung betrifft weiterhin ein System, ein Computerprogramm und ein Computerprogrammprodukt zur Durchführung des erfindungsgemäßen Verfahrens.

### Kurze Beschreibung der Zeichnungen

Es zeigt beispielhaft und schematisch
FIG 1 eine Darstellung eines erfindungsgemäßen Verfahrens und eines Systems, insbesondere ein autonom fliegendes unbemanntes Flugobjekt 7 mit seiner Steuerungseinheit 6 inklusive Schnittstellen nach Außen.
FIG 2 ein erfindungsgemäßes Verfahren zur Überwachung von drei technischen Anlagen 1,2 und 3 eines Industriebetriebs 4 mit einem autonom fliegenden unbemannten Flugobjekt 7.

### Beschreibung der Ausführungsformen

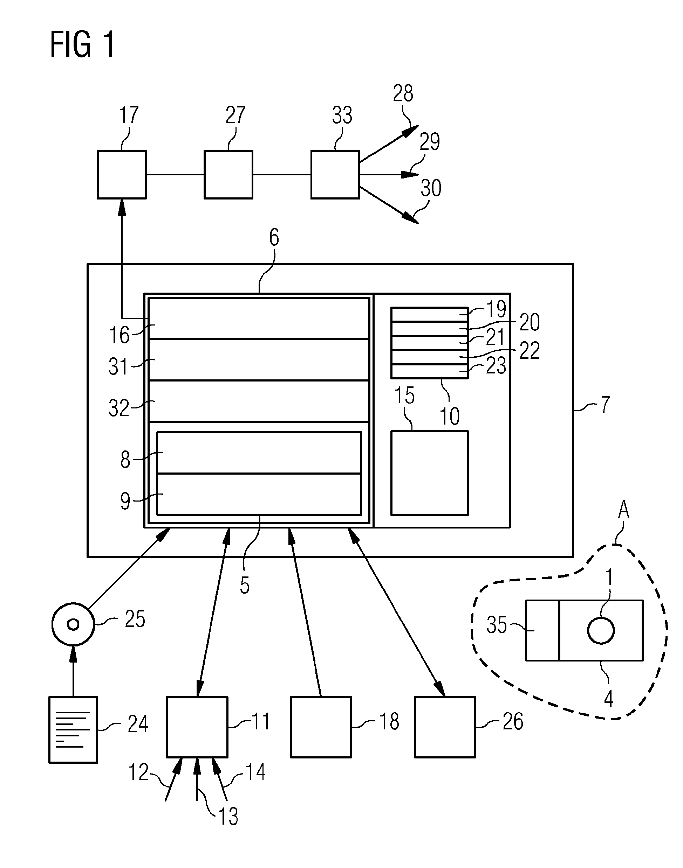

FIG 1 zeigt eine Darstellung eines erfindungsgemäßen Verfahrens und eines Systems, insbesondere ein autonom fliegendes unbemanntes Flugobjekt 7 mit seiner Steuerungseinheit 6 inklusive Schnittstellen nach Außen.

Das autonom fliegende unbemannte Flugobjekt 7, auch als Unmanned Aerial Vehicel (UAV) bezeichnet, ist beispielsweise als sogenannter Quadrocopter ausgebildet. Ein derartiger Quadrucopter verfügt über einen Grundkörper, welcher die Steuerungseinheit 6, die Detektionseinrichtungen 10 und Sensorikeinrichtungen 15 umfasst. Das autonom fliegende unbemannte Flugobjekt 7 wird im Folgenden als UAV bezeichnet. Der Antrieb des UAV erfolgt mittels vier am Grundkörper angebrachten Propeller, welche von der Steuerungseinheit 6 gesteuert werden. Damit kann das UAV nicht nur in sämtliche Raumrichtungen bewegt werden, sondern es ist auch ein Schwebezustand des UAV an einem beliebigen Ort im Raum möglich. Das UAV kann autonom fliegen, das bedeutet, dass während des Fluges des UAV keine Steuerung durch ein Bedienpersonal notwendig ist.

Es ist jedoch jederzeit eine Steuerung des UAV von einer Bodenskontrollstation 26 aus möglich. Dazu steht die Steuerungseinheit 6 permanent in Verbindung mit der Bodenkontrollstation 26. Das UAV verfügt zudem über eine Satellitendaten-Empfangseinheit 31, welche Satellitendaten empfangen und verarbeiten kann. Die Navigation des UAV erfolgt mittels der Steuerungseinheit 6 auf Basis der Satellitendaten. Vor dem Start des UAV erfolgt zunächst eine Hinterlegung eines Aktionsplans 5 in der Steuerungseinheit 6 des UAV, wobei der Aktionsplan 5 eine Flugroute 8 und eine oder mehrere auszuführende Aktionen 9 von den im UAV integrierten Detektionseinrichtungen 10 umfasst. Der Aktionsplan 5 wird als Computerprogramm 24 in der Steuerungseinheit 6 hinterlegt. Das Computerprogramm 24 kann außerdem auf einem Computerprogrammprodukt 25 gespeichert werden. Die Flugroute 8 wird in Form von nacheinander anzufliegenden Zielpunkten beziehungsweise Koordinaten in der Steuerungseinheit 6 abgespeichert. Die Koordinaten entsprechen den Satellitendaten beziehungsweise Koordinaten einer ersten technischen Anlage 1 eines Industriebetriebs 4, wobei der strichliert umrandete Bereich A eine stark verkleinerte Darstellung des Industriebetriebs 4 mit der ersten technischen Anlage 1 und einen Außenbereich 35 des Industriebetriebs 4 zeigt. Der Aktionsplan 5 umfasst in Form von Daten abgespeicherte Informationen, die festlegen, welche Aktionen mittels der im UAV integrierten Detektionseinrichtungen 10 an den entsprechenden Zielpunkten beziehungsweise Koordinaten auszuführen sind. Das erfindungsgemäße UAV umfasst Detektionseinrichtungen 10, welche vorzugsweise als Kamera 19, als Thermokamera 20, als Temperatursensor 21, als Feuchtigkeitssensor 22 oder als Gasanalysator 23 ausgeführt sind. Im Aktionsplan 5 ist beispielsweise hinterlegt, dass am ersten Zielpunkt Fotoaufnahmen der ersten technischen Anlage 1 mittels der Kamera 19 anzufertigen und anschließend Anlagenteile der ersten technischen Anlage 1 mittels des Gasanalysators 23 auf Gasaustritt zu überprüfen sind. Nachdem der Aktionsplan 5 im der Steuerungseinheit 6 hinterlegt ist, startet das UAV aus einer in FIG 1 nicht dargestellten Basisstation und fliegt entlang der in der Steuerungseinheit 6 als Daten festgelegten Flugroute 8 zur ersten zu überwachenden technischen Anlage 1. Nach Erreichen der ersten technischen Anlage 1 werden die im Aktionsplan 5 hinterlegten auszuführenden Aktionen 9 mittels der Detektionseinrichtungen 10 ausgeführt. Anschließend kehrt das UAV wieder zur Basisstation zurück.

Die Steuerungseinheit 6 ist an ein Datenverarbeitungssystem 11, welches ein Logistiksystem 12, ein Produktionsplanungssystem 13 und ein Instandhaltungsplanungssystem 14 des Industriebetriebs 4 umfasst, angebunden. Darunter ist zu verstehen, dass vor, während und nach dem Flug des UAV Daten leitungsgebunden oder leitungsungebunden - dargestellt durch Pfeile zwischen der Steuerungseinheit 6 und dem Datenverarbeitungssystem 11 - in beide Richtungen zwischen dem Datenverarbeitungssystem 11 und der Steuerungseinheit 6 ausgetauscht werden können. Die im Produktionsplanungssystem 13 enthaltenen Daten umfassen insbesondere alle produktionsrelevanten Daten des Industriebetriebs 4, wie beispielsweise die aktuellen und geplanten Betriebsparameter der ersten technischen Anlage 1 oder weiterer, in FIG 1 nicht dargestellter, technischer Anlagen des Industriebetriebs 4. Die im Logistiksystem 12 enthaltenen Daten umfassen insbesondere alle Daten in Zusammenhang mit der raum-, zeit-, art- und mengenmäßigen Veränderung von Gütern im Industriebetrieb 4. Beispielsweise umfassen diese Daten den Zeitpunkt und die Transportroute von aktuellen und geplanten Transporten von Gütern, die aktuelle und geplante Position von Gütern oder die Art der Güter. Im Gegensatz zum Produktionsplanungssystem 13 und zum Logistiksystem 12 umfasst das Instandhaltungsplanungssystem 14 beispielsweise Wartungs- und Inspektionspläne, die zu erwartende Lebensdauer der ersten technischen Anlage 1 beziehungsweise weiterer, in FIG 1 nicht dargestellter technischer Anlagen, oder statistische Daten wie die Anzahl der notwendigen Wartungsarbeiten, Laufzeitinformationen und Daten der letzen Inspektion. Auf Basis der Wartungspläne wird der Aktionsplan 5 für die durchzuführenden Aktionen 9 der im UAV integrierten Detektionseinrichtungen 10 für die erste zu überwachende technische Anlage 1 erstellt und in der Steuerungseinheit 6 hinterlegt. Zur Festlegung der Flugroute 8 werden die im Instandhaltungsplanungssystem 14 hinterlegten Zielpunkte beziehungsweise die Koordinaten der zu überwachenden ersten technischen Anlage 1 unter Berücksichtigung der produktionsrelevanten Daten und der Daten des Logistiksystems 12 herangezogen. Die Erstellung der Flugroute 8 erfolgt insbesondere unter den Randbedingungen, dass die Flugroute 8 so weit außerhalb von aktuellen oder geplanten Transportrouten von Gütern liegt, dass während des Fluges des UAV keine Gefährdung für das UAV gegeben ist. Außerdem werden aktuelle oder geplante außergewöhnliche betriebliche Situationen, wie beispielsweise Baustellen, Instandhaltungsarbeiten oder Umbauten an oder von der ersten technischen Anlage 1 beziehungsweise in FIG 1 nicht dargestellter weiterer technischer Anlagen, im Industriebetrieb 4, welche in einem der Datenverarbeitungssysteme 11 hinterlegt sind, bei der Erstellung der Flugroute 8 entsprechend berücksichtigt. Die derart bestimmte Flugroute 8 wird in der Steuerungseinheit 6 hinterlegt. Die Flugroute 8 kann auch während des Fluges des UAV unter Berücksichtigung der aktuellen Daten des Datenverarbeitungssystems 11 entsprechend der vorhin genannten Randbedingungen angepasst beziehungsweise verändert werden. Die Steuerungseinheit 6 ist dazu permanent an das Datenverarbeitungssystem 11, vorzugsweise per Funkverbindung, angebunden. Zusätzlich werden die Daten des Datenverarbeitungssystems 11 zur Beurteilung der Durchführbarkeit des Fluges des UAV herangezogen. Würde beispielsweise die geplante Flugroute 8 mit den im Logistiksystem 12 hinterlegten aktuellen oder geplanten Transportrouten von Gütern kollidieren oder ist die Zugänglichkeit der ersten technischen Anlage 1 durch im Instandhaltungsplanungssystem 14 hinterlegte Instandhaltungsarbeiten oder Umbauten behindert, so wird der Flug nicht oder gegebenenfalls zu einem späteren Zeitpunkt durchgeführt. Der Start des Flugs des UAV wird durch das Datenverarbeitungssystem 11, auf Basis entsprechender im Instandhaltungsplanungssystem 14 hinterlegten Wartungs- beziehungsweise Instandhaltungspläne des Industriebetriebs 4 ausgelöst. Im Industriebetrieb vorhandene Positionserkennungssysteme wie Kransysteme, Satellitenbasierte-Positionierungssysteme oder drahtlose Netzwerke, werden zur Positionserkennung und/oder zur Planung der Flugroute 8 UAV genutzt.

Die auszuführenden Aktionen 9 umfassen das Sammeln von Daten wie Fotoaufnahmen und/oder Thermographieaufnahmen der ersten technischen Anlage 1 und/oder Temperatur und/oder Feuchtigkeit und/oder Gaszusammensetzung in der Umgebung der erstem technischen Anlage 1.

Die gesammelten Daten der ersten technischen Anlage 1 werden während des Fluges des UAV in einer Speichereinheit 32 des UAV gespeichert und nach der Landung des UAV in die Empfangseinheit 17 übertragen. Die gespeicherten Daten werden mittels einer geeigneten Auswerteeinheit 27 ausgewertet und analysiert. Die Auswertung der gesammelten Daten kann auch vollständig automatisiert erfolgen. Eine weitere Möglichkeit besteht darin, die während des Fluges gesammelten Daten schon während des Fluges mittels einer Sendeeinheit 16 des UAV an die Empfangseinheit 17 zu übertragen und gegebenenfalls schon während des Fluges mittels der Auswerteeinheit 27 auszuwerten und zu analysieren. Beispielsweise können Livebilder der ersten technischen Anlage 1 an die Empfangseinheit 17 übertragen werden, welche unmittelbar entweder vom Bedienpersonal oder automatisch ausgewertet werden. Damit können, wenn auf Grund der Ergebnisse der Auswertung der gesammelten Daten Anomalien der ersten technischen Anlage 1 festgestellt werden, noch während des Fluges gegebenenfalls weitere erforderliche Daten der ersten technischen Anlage 1 gesammelt und zur Empfangseinheit 17 übertragen und ausgewertet werden. Die ausgewerteten Daten werden an ein Condition Monitoring System 33 übertragen, welches das Instandhaltungspersonal automatisch im Falle von Anomalien mittels Human Interface Devices 28, Tablets 29 oder Smartphones 30 alarmiert.

Die Steuerungseinheit 6 ist an ein Wetterdatensystem 18 angebunden und Wetterdaten des Wetterdatensystems 18 werden zur Entscheidung über die Durchführbarkeit des Fluges des UAV herangezogen. Die Wetterdaten des Wetterdatensystems 18 werden in die Steuerungseinheit 6 des UAV übertragen, dort analysiert und basierend auf dem Ergebnis der Analyse der Wetterdaten erfolgt eine Startfreigabe für das UAV. Dies ist beispielsweise dann relevant, wenn sich die erste technische Anlage in einem Außenbereich 35 des Industriebetriebs 4 befindet, und das UAV während des Fluges schädlichen Wetterbedingungen ausgesetzt wäre. Eine Startfreigabe erfolgt auch dann nicht, wenn die im Rahmen eines Überwachungsfluges zu sammelnden Daten auf Grund der vorherrschenden Wetterbedingungen nicht zuverlässig wären. Zu nennen wären beispielsweise Fotoaufnahmen der ersten technischen Anlage 1 bei starkem Nebel, wenn diese in einem Außenbereich 35 des Industriebetriebes 4 angeordnet wäre.

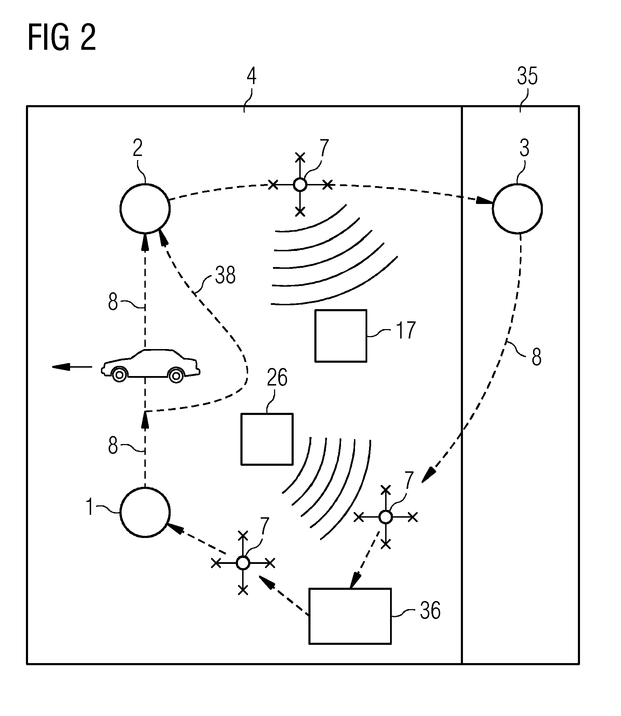

FIG 2 zeigt ein erfindungsgemäßes Verfahren zur Überwachung von drei technischen Anlagen 1,2 und 3 eines Industriebetriebs 4 mit einem autonom fliegenden unbemannten Flugobjekt 7 - im Folgenden mit UAV bezeichnet. Die technischen Anlagen 1 und 2 und befinden sich in einem Innenbereich 34 des Industriebetriebs 4, während sich die technische Anlage 3 im Außenbereich 35 des Industriebetriebs 4 befindet. Das UAV startet von einer Basisstation 36 zur ersten technischen Anlage 1. Dort werden Daten der ersten technischen Anlage 1 gesammelt. Danach würde das UAV gemäß der Flugroute 8 in Richtung der zweiten technischen Anlage 2 weiterfliegen, jedoch wird von in FIG 2 nicht dargestellten Sensorikeinrichtungen des UAV ein Transport von Gütern 37 innerhalb der Flugroute 8 als Hindernis erkannt, wonach automatisch die Festlegung einer alternativen Flugroute 38 erfolgt. Nach Erreichen der zweiten technischen Anlage 2 und Sammeln von Daten der zweiten technischen Anlage 2 erfolgt ein Weiterflug des UAV zur dritten technischen Anlage 3 entlang der Flugroute 8. Die gesammelten Daten der zweiten technischen Anlage 2 werden während des Fluges des UAV per Funk an die Empfangseinheit 17 gesendet und anschließend ausgewertet. Nach Sammlung von Daten der dritten technischen Anlage 3 fliegt das UAV entlang der Flugroute 8 wieder in die Basisstation 36. Das UAV könnte in einem manuellen Modus von der Basisstation 26 aus durch Bedienpersonal auch jederzeit zu einer weiteren technischen Anlage des Industriebetriebs 4 gesteuert werden um dort weitere Daten zu Sammeln.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Liste der Bezugszeichen

| | |
|---|---|
| 1 | erste technische Anlage |
| 2 | zweite technische Anlage |
| 3 | dritte technische Anlage |
| 4 | Industriebetrieb |
| 5 | Aktionsplan |
| 6 | Steuerungseinheit |
| 7 | unbemanntes Flugobjekt |
| 8 | Flugroute |
| 9 | auszuführende Aktionen |
| 10 | Detektionseinrichtungen |
| 11 | Datenverarbeitungssystem |
| 12 | Logistiksystem |
| 13 | Produktionsplanungssystem |
| 14 | Instandhaltungsplanungssystem |
| 15 | Sensorikeinrichtungen |
| 16 | Sendeeinheit |
| 17 | Empfangseinheit |
| 18 | Wetterdatensystem |
| 19 | Kamera |
| 20 | Thermokamera |
| 21 | Temperatursensor |
| 22 | Feuchtigkeitssensor |
| 23 | Gasanalysator |
| 24 | Computerprogramm |
| 25 | Computerprogrammprodukt |
| 26 | Bodenkontrollstation |
| 27 | Auswerteeinheit |
| 28 | Human Interface Device |
| 29 | Tablet |
| 30 | Smartphone |
| 31 | Satellitendaten-Empfangseinheit |
| 32 | Speichereinheit |
| 33 | Condition Monitoring System |
| 34 | Innenbereich |
| 35 | Außenbereich |
| 36 | Basisstation |
| 37 | Transport von Gütern |
| 38 | alternative Flugroute |
| A | Bereich |

## Patentansprüche

1. Verfahren zur Überwachung zumindest einer technischen Anlage (1,2,3) eines Industriebetriebs (4), umfassend die Verfahrensschritte:
- Hinterlegung eines Aktionsplans (5) in einer Steuerungseinheit (6) eines autonom fliegenden unbemannten Flugobjekts (7), wobei der Aktionsplan (5) umfasst:
● eine Flugroute (8) für das unbemannte Flugobjekt (7),
● eine oder mehrere auszuführende Aktionen (9) von im unbemannten Flugobjekt (7) integrierten Detektionseinrichtungen (10),
- Flug des unbemannten Flugobjekts (7) entlang der Flugroute (8) zu der zumindest einen zu überwachenden technischen Anlage (1,2,3) und anschließend
- Durchführen der im Aktionsplan (5) hinterlegten auszuführenden Aktionen (9) mittels der Detektionseinrichtungen (10).

2. Verfahren nach Anspruch 1, **dadurch gekennzeichnet, dass** die Steuerungseinheit (6) an ein Datenverarbeitungssystem (11), welches ein Logistiksystem (12) und/oder ein Produktionsplanungssystem (13) und/oder ein Instandhaltungsplanungssystem (14) des Industriebetriebs (4) umfasst, angebunden ist und dass aktuelle Daten des Datenverarbeitungssystems (11) zur Festlegung der Flugroute (8), zur Anpassung der Flugroute (8) während des Fluges und/oder zur Entscheidung über die Durchführbarkeit des Fluges des unbemannten Flugobjekts (7) herangezogen werden.

3. Verfahren nach einem der Ansprüche 1 oder 2, **dadurch gekennzeichnet, dass** während des Fluges des unbemannten Flugobjekts (7) Hindernisse innerhalb der Flugroute (8) und/oder das unbemannte Flugobjekt (7) gefährdende Umgebungsbedingungen von Sensorikeinrichtungen (15) des unbemannten Flugobjekts (7) erkannt werden, wonach automatisch oder manuell eine alternative Flugroute (8) festgelegt wird.

4. Verfahren nach einem der Ansprüche 2 oder 3, **dadurch gekennzeichnet, dass** der Start des Flugs des unbemannten Flugobjekts (7), gegebenenfalls nach manueller Freigabe, durch das Datenverarbeitungssystem (11) des Industriebetriebs (4) ausgelöst wird.

5. Verfahren nach einem der vorhergehenden Ansprüche, **dadurch gekennzeichnet, dass** vorhandene Positionserkennungssysteme im Industriebetrieb (4), insbesondere Kransysteme, Satellitenbasierte Navigationssysteme oder drahtlose Netzwerke, zur Positionserkennung und/oder zur Planung der Flugroute (8) des unbemannten Flugobjekts (7) genutzt werden.

6. Verfahren nach einem der vorhergehenden Ansprüche, **dadurch gekennzeichnet, dass** die auszuführenden Aktionen (9) das Sammeln von Daten über die zumindest eine zu überwachende technische Anlage (1,2,3) umfassen und dass die Daten während und/oder nach dem Flug des unbemannten Flugobjekts (7) mittels einer Sendeeinheit (16) des unbemannten Flugobjekts (7) zu einer Empfangseinheit (17) übertragen werden, wonach eine Auswertung der Daten erfolgt.

7. Verfahren nach einem der vorhergehenden Ansprüche, **dadurch gekennzeichnet, dass** die Steuerungseinheit (6) an ein Wetterdatensystem (18) angebunden ist und dass Wetterdaten des Wetterdatensystems (18) zur Entscheidung über die Durchführbarkeit des Fluges des unbemannten Flugobjekts (7) herangezogen werden.

8. Verfahren nach einem der vorhergehenden Ansprüche, **dadurch gekennzeichnet, dass** die Detektionseinrichtungen (10) als Kamera (19), Thermokamera (20), Temperatursensor (21), Feuchtigkeitssensor (22) und/oder Gasanalysator (23) ausgeführt sind.

9. Verfahren nach einem der Ansprüche 6 bis 8, **dadurch gekennzeichnet, dass** die Daten über die zumindest eine zu überwachende technische Anlage (1,2,3) umfassen:
● Fotoaufnahmen und/oder Thermographieaufnahmen der zumindest einen zu überwachenden technischen Anlage (1,2,3) und/oder
● Temperatur und/oder Feuchtigkeit und/oder Gaszusammensetzung in der Umgebung der zumindest einen zu überwachenden technischen Anlage (1,2,3) und/oder
● Temperatur der zu überwachenden technischen Anlage (1, 2, 3).

10. System zur Überwachung zumindest einer technischen Anlage (1,2,3) eines Industriebetriebs (4) , wobei das System umfasst:
● ein autonom fliegendes unbemanntes Flugobjekt (7) mit Detektionseinrichtungen (10) zur Erfassung von Informationen über die zumindest eine zu überwachende technische Anlage (1,2,3),
● eine im unbemannten Flugobjekt (7) integrierte Steuerungseinheit (6) zur Steuerung des unbemannten Flugobjekts (7),
● ein in der Steuerungseinheit (6) hinterlegter Aktionsplan (5), umfassend zumindest eine Flugroute (8) für das unbemannte Flugobjekt (7) und eine oder mehrere auszuführende Aktionen (9) der Detektionseinrichtungen (10).

11. System nach Anspruch 10, **dadurch gekennzeichnet, dass** die Steuerungseinheit (6) an ein Datenverarbeitungssystem (11), insbesondere an ein Logistiksystem (12) und/oder an ein Produktionsplanungssystem (13) und/oder an ein Instandhaltungsplanungssystem (14) des Industriebetriebs (4) angebunden ist.

12. System nach einem der Ansprüche 10 oder 11, **dadurch gekennzeichnet, dass** das unbemannte Flugobjekt (7) Sensorikeinrichtungen (15) zur Erkennung von Hindernissen innerhalb der Flugroute (8) und/oder zur Erkennung von das unbemannte Flugobjekt (7) gefährdenden Umgebungsbedingungen während des Flugs umfasst.

13. System nach einem der Ansprüche 10 bis 12, **dadurch gekennzeichnet, dass** die Steuerungseinheit (6) an vorhandene Positionserkennungssysteme des Industriebetriebs (4), insbesondere an Kransysteme, an Satellitenbasierte Positionierungssysteme und/oder an drahtlose Netzwerke angebunden ist.

14. System nach einem der Ansprüche 10 bis 13, **dadurch gekennzeichnet, dass** das System weiter umfasst:
● eine im unbemannten Flugobjekt (7) integrierte Sendeeinheit (16) zur Übermittlung von mittels der Detektionseinrichtung (10) gesammelten Daten über die zumindest eine zu überwachende technische Anlage (1,2,3) an eine Empfangseinheit (17) und
● die Empfangseinheit (17) zum Empfang der von der Sendeeinheit (16) übermittelten Daten.

15. System nach einem der Ansprüche 10 bis 14, **dadurch gekennzeichnet, dass** die Steuerungseinheit (6) an ein Wetterdatensystem (18) angebunden ist.

16. System nach einem der Ansprüche 10 bis 15, **dadurch gekennzeichnet, dass** die Detektionseinrichtungen (10) zumindest ein Mitglied aus der Gruppe bestehend aus den Mitgliedern:
● Kamera (19),
● Thermokamera (20),
● Temperatursensor (21),
● Feuchtigkeitssensor (22),
● Gasanalysator (23)
umfassen.

17. Computerprogramm (24) zur Durchführung eines Verfahrens nach einem der Ansprüche 1 bis 9 bei Ablauf in einer Steuerungseinheit (6) eines Systems nach einem der Ansprüche 10 bis 16.

18. Computerprogrammprodukt (25), auf dem ein Computerprogramm (24) nach Anspruch 17 gespeichert ist.
